## Europäisches Patentamt
## European Patent Office
## Office européen des brevets

(19)

(11) Veröffentlichungsnummer : **0 149 819**
**B1**

(12) **EUROPÄISCHE PATENTSCHRIFT**

(45) Veröffentlichungstag der Patentschrift :
19.07.89

(51) Int. Cl.⁴ : **G 01 J   5/20**

(21) Anmeldenummer : 84115783.7

(22) Anmeldetag : 19.12.84

(54) Strahlungsmessgerät und unter Verwendung desselben ausgebildetes, aus einem der Strahlung ausgesetzten Messgerät und einem gegen die Strahlung abgeschirmten Referenzgerät bestehenden Messsystem.

(30) Priorität : 20.01.84 DE 3401946
09.03.84 DE 3408724

(43) Veröffentlichungstag der Anmeldung :
31.07.85 Patentblatt 85/31

(45) Bekanntmachung des Hinweises auf die Patenterteilung : 19.07.89 Patentblatt 89/29

(84) Benannte Vertragsstaaten :
CH DE FR GB IT LI SE

(56) Entgegenhaltungen :
TECHNISCHES MESSEN, Band 49, Nr. 10, Oktober 1982, Seiten 355-357, München, DE; R. HARTMANN et al.: "Hochempfindliche Bolometer in Dünnschichttechnik"
MESSEN UND PRÜFEN, Nr. 3, März 1982, Seiten 164-167, Bad Wörlshofen, DE; "Dünne Schichten für Messgrössenwandler"
REVIEW OF SCIENTIFIC INSTRUMENTS, Band 53, Nr. 10, Oktober 1982, Seiten 1527-1534, New York, US; J. SCHIVELL et al.: "Bolometer for measurements on high-temperature"
ANALYTICAL CHEMISTRY, Band 51, Nr. 6, Mai 1979, Seiten 712-717; D.G. TAYLOR et al.: "Light entensity measurements I: large area bolometers with micro-watt sensitivities and absolute calibration of the Rhodamine B quantum counter"

(73) Patentinhaber : **Max-Planck-Gesellschaft zur Förderung der Wissenschaften e.V.**
**Bunsenstrasse 10**
**D-3400 Göttingen (DE)**

(72) Erfinder : **Betzler, Peter, Dipl.-Ing.**
**Erzgiessereistrasse 40**
**8000 München 2 (DE)**
Erfinder : **Mast, Karl-Friedrich, Dr.-Phys.**
**Mühlgasse 14a**
**8046 Garching (DE)**
Erfinder : **Müller, Reinhold, Dr.**
**Mühlgasse 14a**
**D-8046 Garching (DE)**

(74) Vertreter : **von Bezold, Dieter, Dr. et al**
**Dr. Dieter von Bezold Dipl.-Ing. Peter Schütz Dipl.-Ing. Wolfgang Heusler Brienner Strasse 52**
**D-8000 München 2 (DE)**

EP 0 149 819 B1

## Beschreibung

Die Erfindung betrifft ein Strahlungsmeßgerät (Bolometer) und richtet sich ferner auf ein unter Verwendung desselben ausgebildetes, aus einem der Strahlung ausgesetzten Meßgerät und einem gegen die Strahlung abgeschirmten Referenzgerät bestehendes Meßsystem.

Bei heutigen großen Plasmamaschinen wird ein wesentlicher Teil der im Plasma deponierten Heizleistung durch elektromagnetische Strahlung und Neutralteilchen zur Wand des Vakuumgefäßes transportiert. Um Aussagen über den Energiehaushalt des Plasmas machen zu können, ist es nötig, über den in Frage kommenden Spektralbereich die Strahlungsleistung, räumlich und zeitlich aufgelöst, absolut zu messen. Der zu messende Spektralbereich erstreckt sich vom Infrarotbereich bis zum Bereich der weichen Röntgenstrahlung im 10 keV-Gebiet.

Für breitbandige Strahlungsmessungen werden als Bolometer bezeichnete Strahlungsmeßgeräte eingesetzt. Dabei handelt es sich um Strahlungsdetektoren, die für einen breiten Spektralbereich (Infrarot bis weiche Röntgenstrahlung) empfindlich sind. Sie messen integral die einfallende Strahlungsleistung. Die Wirkungsweise des Bolometers beruht auf der Absorption der zu messenden Strahlung und einer daraus resultierenden Erwärmung des Bolometerdetektors. Das Bolometersignal ist proportional der Temperaturerhöhung des Detektors und die Empfindlichkeit hängt von dem Temperaturkoeffizienten des zur Messung der Temperaturerhöhung ausgenutzten physikalischen Effektes ab.

In der Plasmaphysik werden folgende verschiedene Bolometerarten verwendet :

    (1) Halbleiterbolometer (Germaniumschicht)
    (2) Thermistorbolometer (Nickelabsorber mit davon isoliertem Thermistor)
    (3) Gold- oder Platin-Widerstände (freihängend in Mäander- oder Spiralform)
    (4) Pyroelektrische Bolometer
    (5) IR-Bolometer
    (6) Folienbolometer.

Die vom Plasma emittierte, auf den Detektor auftreffende Strahlungsleistung liegt in der Größenordnung von wenigen mW. Um diese geringen Strahlungsleistungen messen zu können, empfiehlt sich der Einsatz von Folienbolometern.

Folienbolometer bestehen aus drei funktional verschiedenen Elementen,
    (a) einer elektrisch isolierenden Trägerfolie mit großer mechanischer Stabilität, auf die eine
    (b) hochohmige, aus dünnen und schmalen Bahnen bestehende Widerstandsschicht mit geringer Wärmekapazität in Form eines Mäanders aufgebracht ist. Auf der anderen Seite der Folie liegt genau über der Widerstandsschicht eine
    (c) Absorberschicht, die allseitig an ihren Rändern von einem Kühlkörper berührt wird.

Der unmittelbare Zusammenhang zwischen der Zeit für den Wärmeausgleich in Richtung des Kühlkörpers und den Absorberabmessungen führt bei der bisherigen Auslegung von Folienbolometern zu relativ großen Abmessungen des Bolometerdetektors. Detektoren mit großen Abmessungen besitzen allerdings folgende Nachteile : Blendeneffekte der geometrischen Optik, hervorgerufen durch die Abmessungen der Detektoroberfläche in bezug auf den Detektorabstand vom Meßobjekt und dessen Abmessungen ;

relativ große elektrische Kapazität, die den Einsatz von Trägerfrequenz-Signalübertragungen unmöglich macht ;

Empfindlichkeit der Signalübertragung gegen niederfrequente Einstreuungen ; werden Hochfrequenzheizungen für das Plasmaexperiment eingesetzt, sind große Einstreuungen für die Bolometermessungen zu erwarten.

Bei Einsatz einer Vielzahl von solchen Meßgeräten ergeben sich bei mäßiger Raumauflösung bereits große zur Unterbringung der Meßgeräte erforderliche Räume.

Aus « Review of Scientific Instruments », Vol. 53 (1982) No. 10, Seiten 1527-1533 ist es bekannt, den aus einem Platinfoliengitter bestehenden Sensor eines Bolometers mit einem ähnlich ausgebildeten Referenzsensor in eine Widerstandsmeßbrücke zu schalten, an deren eine Diagonale eine rechteckförmige Wechselspannung von 20 kHz angelegt wird. Aus « Analytical Chem. » Vol. 51, No. 6 (1979), S. 712-717 ist es bekannt, den aus einem Thermistor auf einer absorbierenden Metallfolie bestehenden, in eine Widerstandsmeßbrücke geschalteten Sensor eines Bolometers in einen massiven Aluminiumzylinder einzubauen.

Ausgehend von einem Strahlungsmeßgerät mit einer elektrisch isolierenden Trägerfolie, auf deren einer Seite eine der zu messenden Strahlung auszusetzende Absorberschicht vorgesehen ist, der gegenüber auf der anderen Seite der Trägerfolie eine hochohmige Widerstandsschicht aufgebracht ist, die Bestandteil einer Widerstandsmeßbrücke ist, stellt sich die Erfindung die Aufgabe, das Strahlungsmeßgerät so weiter zu entwickeln, daß es folgenden Forderungen gerecht wird :

    (1) kleine Detektorabmessungen und daraus resultierende
      (a) Möglichkeit höherer Raumauflösung,

(b) bessere mechanische Festigkeit,

(c) vernachlässigbare Blendeneffekte der geometrischen Optik,

(2) kleine elektrische Kapazität,

(3) vorbestimmte Zeitkonstante,

(4) Widerstandsfähigkeit gegen Gamma- und Neutronenstrahlung,

(5) voneinander thermisch unabhängige Detektoren,

(6) voneinander elektrisch unabhängige Detektoren,

(7) ausgeschaltete thermische und elektrische Störungen,

(8) elektrische Durchschlagsfestigkeit,

(9) Einsatzfähigkeit im Hochvakuum bis 300 °C.

Gelöst wird diese Aufgabe erfindungsgemäß dadurch, daß die Absorberschicht in eine seitlich vorstehende, mit ihr in thermisch leitendem Kontakt stehende Wärmeleitschicht übergeht und daß die Wärmeleitschicht gegen die zu messende Strahlung abgeschirmt ist.

An die seitlich vorstehende Wärmeleitschicht ist zweckmäßig ein Kühlkörper angeschlossen.

Die Absorberschicht und gegebenenfalls die Wärmeleitschicht können aus einem Edelmetall, vorzugsweise Gold, bestehen. Zweckmäßig ist es, wenn in weiterer Ausbildung der Erfindung die Wärmeleitschicht aus einer die Absorberschicht seitlich überragenden, wesentlich dünneren, gegebenenfalls mit ihr einstückigen und/oder aus dem gleichen Material wie die Absorberschicht gefertigten Schicht besteht.

Die Erfindung schafft ein für einen breiten Spektralbereich einschließlich weicher Röntgenstrahlung geeignetes Bolometer, dessen Empfindlichkeit und Zeitkonstante (des Wärmeabflusses von der Absorberschicht zum Kühlkörper) unabhängig von der Strahlungswellenlänge vorherbestimmbar sind, wobei die Absorptionsdicke unabhängig von der Zeitkonstante wählbar ist, und das eine extreme Miniaturisierung erlaubt. Hierbei ist u. a. wesentlich, daß die Wärme von der Absorberschicht zum Kühlkörper über eine besondere Wärmeleitschicht abgeleitet wird, die gegen die zu messende Strahlung abgeschirmt ist. Damit lassen sich die jeweils gewünschte Empfindlichkeit und Zeitkonstante unabhängig von der Wellenlänge genau reproduzierbar einstellen. Zugleich kann eine gewünschte Absorberschichtdicke, d. h. Grenzwellenlänge des Meßbereiches frei gewählt werden.

Durch die erfindungsgemäße Lösung werden die Energieabsorption und die Wärmeleitung voneinander getrennt, wodurch die Dimensionen des Detektors wesentlich verringert werden können, so daß in weiterer Ausbildung der Erfindung mehrere je eine Absorberschicht tragende Wärmeleitflächen mit Abstand in Reihe nebeneinander angeordnet werden können.

Man kann die den Absorberschichten zugeordneten hochohmigen Widerstandsschichten jeweils in einer gesonderten Widerstandsmeßbrücke schalten. Ein anderer Weg zu messen besteht darin, daß von den den Absorberschichten zugeordneten hochohmigen Widerstandsschichten wenigstens einige in Reihe geschaltet und die derart gebildeten Widerstandsgruppen in einer gesonderten Widerstandsmeßbrücke geschaltet sind. Damit kann der Widerstandswert eines Meßsystems entsprechend vergrößert werden, wodurch sich die Brückenspannung bei gleicher auf die Widerstände aufgebrachter Leistung entsprechend erhöhen und damit die Empfindlichkeit des Meßsystems verbessern läßt.

In weiterer Ausbildung der Erfindung ist der der hochohmigen Widerstandsschicht in der Meßbrücke gegenüberliegende Festwiderstand ebenfalls als hochohmige Widerstandsschicht ausgebildet und zusammen mit der hochohmigen Widerstandsschicht auf der der Absorberseite abgewendeten Seite der Trägerfolie innerhalb einer der Umgrenzung der Absorberschicht entsprechenden Umgrenzung angeordnet. Mit dieser Maßnahme erreicht man eine doppelte Empfindlichkeit der Meßbrücke. Dies ist darauf zurückzuführen, daß dieser Festwiderstand in seiner nunmehrigen Ausbildung als hochohmige Widerstandsschicht ebenfalls Temperaturänderungen ausgesetzt ist, und zwar denselben wie die ehemals allein der Strahlung ausgesetzte hochohmige Widerstandsschicht.

Wenn in weiterer Ausbildung der Erfindung die Wärmeleitschichten über einen Kühlkörper miteinander verbunden sind, läßt sich die Ausdehnung des gesamten Meßsystems wesentlich verringern, weil dadurch eine wechselseitige Beeinflussung der einzelnen Detektoren wegen der unmittelbaren Abführung der Wärme an die Umgebung über den Kühlkörper unterbunden ist.

Dabei wird vorzugsweise so vorgegangen, daß der Kühlkörper die Wärmeleitschichten kontaktierende, gegenüber den Dickenabmessungen der Absorber- und Wärmeleitschichten wesentlich größere Dickenabmessungen aufweisende Scheibe aus einem gut wärmeleitenden Material ausgebildet ist, die jeweils im Bereich der Absorberschichten eine Ausnehmung aufweist, deren seitliche Begrenzung einen Abstand von den seitlichen Begrenzungen der Absorberschichten aufweisen und deren jeweilige Deckfläche mit einem Fenster versehen ist, dessen Abmessungen denen der Absorberschicht entspricht.

Alternativ dazu kann der Kühlkörper auch aus dem Material der Wärmeleitschichten bestehen und mit diesen einstückig ausgebildet sein. Zweckmäßig ist dazu auf die Trägerfolie eine Beschichtung aufgetragen, die Ausnehmungen mit jeweils einem Boden aufweist, dessen mittlerer Bereich die Absorberschicht bildet, die über einen dünnen, die Wärmeleitschicht bildenden Randbereich in das Material der Beschichtung übergeht, die als ganzes den Kühlkörper bildet. Mit dieser Maßnahme lassen sich weitaus einfacher besser definierte geometrische Bedingungen für die Begrenzung der Wärmeleitschicht erzielen. Es ist zwar generell möglich, zur Bildung des die Einstrahlung auf die Absorberschicht

EP 0 149 819 B1

begrenzenden Fensters die Kühlkörperschicht im Bereich der Wärmeleitschicht hinterschnitten auszubilden. Einfacher ist es aber, wenn in weiterer Ausbildung der Erfindung auf der den Kühlkörper bildenden Beschichtung der Trägerfolie ein Maskenkörper mit die Einstrahlung nur auf die Absorberschichten gewährleistenden Fenstern aufgesetzt ist.

Vorzugsweise ist der Abstand zwischen der Begrenzung der jeweiligen Ausnehmung und der Begrenzung der jeweiligen Absorberschicht so gewählt, daß der Wärmeübergang zwischen Absorberschicht und hochohmiger Widerstandsschicht wesentlich rascher erfolgt, als der Wärmeübergang von der Begrenzung der Absorberschicht in den Kühlkörper.

Zur Einstellung der Zeitkonstanten des seitlichen Wärmeabflusses von Absorberschicht zum Kühlkörper ist der Abstand der seitlichen Begrenzung der Absorberschichten zum Kühlkörper auf die Dicke der Wärmeleitschicht abgestimmt.

Besonders vorteilhaft ist es, wenn zur Erleichterung der Montage auf der die hochohmigen Widerstandsschichten tragenden Seite der Trägerfolie in die Widerstandsschichten umgebender Anordnung lötfähige Anschlußflächen vorgesehen sind.

Durch Hinzuschalten eines Referenzgerätes, das möglichst nahe am Meßgerät untergebracht sein soll, können elektrische und thermische Störungen direkt kompensiert werden. Durch Einschalten des Referenzgerätwiderstandes in den zweiten Zweig der Wheatstone'schen Brückenschaltung führen auf beide Detektoren wirkende Effekte zu einer symmetrischen Verstimmung der Brückenzweige und so zu einer Kompensation, die die Abgestimmtheit der Brücke erhält. Besitzen beide Detektoren identische Eigenschaften, bleibt die Meßbrücke ideal abgestimmt.

Dabei wird die Konstruktion zweckmäßig so gewählt, daß der Aufbau des Referenzgerätes identisch demjenigen des Meßgerätes entspricht und das Referenzgerät im gleichen Gehäuse wie das Meßgerät angeordnet ist.

Vorzugsweise sind Meßgerät und Referenzbolometer hintereinander im Gehäuse angeordnet.

Dadurch ergibt sich ein besonders vorteilhafter Aufbau des Meßsystems, weil die lötfähigen Anschlußflächen auf der die Widerstände tragenden Seite der beiden Trägerfolien doppelt vorhanden sein und hintereinander geschaltet werden können, so daß innere und äußere Anschlußflächen entstehen.

Dabei sind dann beim Meßgerät die äußeren lötfähigen Anschlußflächen mit ersten Kontaktstiften leitend verbunden und beim Referenzgerät die inneren lötfähigen Anschlußflächen mit zweiten Kontaktstiften leitend verbunden, während die äußeren Anschlußflächen ausgebohrt sind.

Durch diese Ausbohrungen greifen die ersten Kontaktstifte frei hindurch und die Enden der ersten und zweiten Kontaktstifte bilden den gemeinsamen Anschlußkörper des aus dem Meßbolometer und aus dem Referenzbolometer bestehenden Meßsystems.

Das Meßgerät wird zwischen zwei Kühlkörpern mit den entsprechenden Ausnehmungen eingespannt und mit mechanisch stabilen Anschlüssen versehen.

Bei den Kühlkörpern handelt es sich um Aluminiumscheiben, die die Detektoren auf die Gehäusetemperatur des Meßsystems abkühlen. Der auf der Absorberseite liegende Kühlkörper ist so ausgelegt, daß die Wärmeleitflächen an ihren Rändern von dem darauf aufgesetzten Kühlkörper berührt werden. Dieser Kühlkörper verfügt über Ausfräsungen, die wiederum jeweils ein Fenster aufweisen, das lediglich den Zugang zum Absorber freiläßt.

Das Meßgerät kann wegen der scheibenartigen Ausbildung des Kühlkörpers flach montiert werden. Durch Ausnehmungen des auf der Widerstandsseite aufliegenden Kühlkörpers kann das Meßgerät optisch justiert werden.

Die Gesamtkonstruktion zeichnet sich durch besonders einfache Montierbarkeit aus. Es ist nur nötig, die Durchführungslöcher durch das Meß- bzw. Referenzgerät für Klemmschrauben und die Kontaktstifte zu stanzen.

Die Meß- und Referenzgeräte können dann montiert und verlötet werden und schließlich kann das Meßsystem einfach zusammengesteckt werden.

Nach der Montage sind alle Bauelemente nur in Meßrichtung auf Druck belastet. Die Druckkräfte halten nicht nur die Konstruktion zusammen, sondern liefern auch den Kontaktdruck zwischen den Anschlußflächen und ihren Kontaktstiften und den Kontaktdruck für die im Sockelkörper steckenden Kontaktstifte.

Es genügt ein Gewindering, um die zusammengesteckten Einzelelemente zu sichern.

Bei einer abgeänderten Ausführungsform des Meßsystems sind Meßgerät und Referenzgerät nebeneinander auf der Trägerfolie angeordnet, wobei selbstverständlich nur das Meßgerät der Strahlung ausgesetzt ist, das Referenzgerät aber gegen die zu messende Strahlung abgeschirmt werden muß.

Die Anordnung des Meßsystems in weiterer Ausbildung der Erfindung derart, daß die hochohmigen Widerstandsschichten des Meßgerätes und die hochohmigen Widerstandsschichten des Referenzgerätes jeweils als Mäander ausgebildet und die Mäander der hochohmigen Widerstandsschichten von Meßgerät bzw. Referenzgerät ineinander verzahnt auf der Trägerfolie angeordnet sind und auf voneinander abgewendeten Seiten dieser Nebeneinanderanordnung von Meß- und Referenzgerät je zwei in Anschlußflächen ausmündende Leiterbahnen vorgesehen sind, von denen die äußeren die inneren um die Abschlußflächen dieser inneren Leiterbahnen herum umschlingen, wobei der eine Mäander des einen Bolometers zwischen den beiden äußeren Leiterbahnen und der andere Mäander dieses Bolometers

4

zwischen den inneren Leiterbahnen geschaltet ist, während die beiden Mäander des anderen Bolometers jeweils zwischen einer äußeren und einer inneren Leiterbahn geschaltet sind, ermöglicht eine Ausbildung, die mit einer einzigen Maske ohne jegliche Überschneidung von Leiterbahnen herstellbar ist. Dabei soll der Begriff Mäander selbstverständlich in weitestem Umfang verstanden werden und nicht nur kammartige Gebilde umfassen. Auch spiralförmige Verlegungen lassen sich ineinander verschachteln und ermöglichen Anschlüsse an den äußeren Spiralenden, wenn sie als hin- und zurücklaufende Doppelspiralen ausgebildet werden. Bei der Wahl des Mäanders wird man immer so vorgehen, daß Anschlüsse in der Ebene des Mäanders möglich sind und nicht solche, die winkelig zu dieser Ebene stehen, erforderlich werden.

Die angegebene Anordnung kann in weiterer Ausbildung der Erfindung zu mehreren in vorzugsweise symmetrischer Anordnung auf einer Trägerfolie vorgesehen werden.

Die Zeichnung zeigen in

Fig. 1   eine schematische Darstellung des Aufbaus eines Folienbolometers nach der Erfindung ;

Fig. 2   eine Brückenschaltung, wie sie für ein Folienbolometer nach Fig. 1 zum Einsatz kommt ;

Fig. 3   eine Draufsicht auf eine Trägerfolie mit vier in Reihe nebeneinander angeordneten Absorberschichten mit ihren zugeordneten Wärmeleitschichten bei einer bevorzugten Ausführungsform ;

Fig. 4   eine Unteransicht der Trägerfolie nach Fig. 3 ;

Fig. 5   eine Ausführungsform eines die Wärmeleitschichten verbindenden Kühlkörpers ;

Fig. 6   einen Schnitt durch den Kühlkörper nach Fig. 5 längs der Linie VI-VI der Fig. 5 ;

Fig. 7   eine perspektivische Explosionszeichnung einer bevorzugten Ausführungsform eines Meßsystems nach der Erfindung ;

Fig. 8   eine Teildraufsicht auf eine abgeänderte Ausführungsform eines Meßsystems, bei dem Meß- und Referenzgeräte in mehrfacher Wiederholung nebeneinander angeordnet sind ;

Fig. 9   einen Schnitt längs der Linie IX-IX der Fig. 8, wobei die auf der Unterseite der Trägerfolie vorgesehenen hochohmigen Widerstandsschichten wegen der Schwierigkeit der Wiedergabe von Schnitten so extrem dünner Schichten nicht angedeutet sind ;

Fig. 10   eine Draufsicht auf ein Paar von hochohmigen Widerstandsschichten, wie den jeweiligen Paaren aus Meß- und Referenz-Absorberschicht des Meßsystems nach Fig. 8 und 9 zugeordnet sind, mit ihren Anschlüssen ;

Fig. 11   eine Draufsicht auf eine Vielzahl von Paaren hochohmiger Widerstandsschichten zu der Anordnung aus Meß- und Referenz-Absorberschichten nach Fig. 8 ;

Fig. 12   eine schematische Darstellung der Temperaturverteilungsdarstellung von der Absorberschicht über die Wärmeleitschicht zum Kühlkörper ;

Fig. 13   eine graphische Darstellung des zeitlichen Temperaturverlaufes in der Widerstandsschicht bei annähernd gleichen Zeitkonstanten in X-, Y-Richtung bzw. Z-Richtung ;

Fig. 14   eine der Darstellung nach Fig. 13 ähnliche Darstellung, jedoch für eine wesentlich größere Zeitkonstante in X-, Y-Richtung ;

Fig. 15   eine der Darstellung nach Fig. 14 ähnliche Darstellung, jedoch für zwei verschiedene Zeitkonstanten in X-, Y-Richtung.

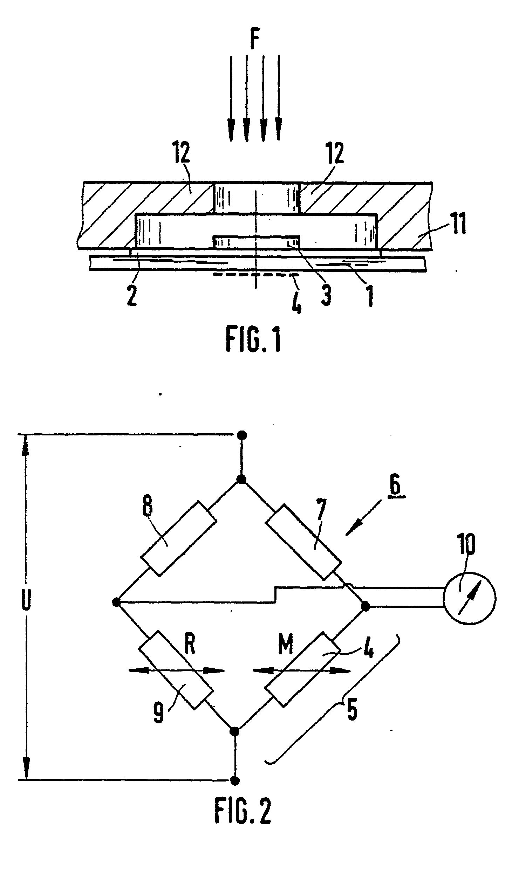

In Fig. 1 ist mit 1 eine Trägerfolie aus einem elektrisch isolierenden Material bezeichnet, beispielsweise aus Glimmer oder aus dem unter dem Warenzeichen « Capton » bekannten Kunststoffmaterial. Diese Materialien eignen sich wegen ihrer hohen Strahlenbelastbarkeit und Festigkeit gegenüber hohen Temperaturen besonders gut.

Auf die Trägerfolie 1 ist die Wärmeleitschicht 2 aufgedampft, die vorzugsweise aus Gold oder Platin besteht. Die Dicke dieser Schicht beträgt ca. 0,5 μm und weniger.

In der Mitte dieser Wärmeleitschicht 2 ist eine Absorberschicht 3 aufgedampft, die aus dem gleichen Material wie die Wärmeleitschicht 2 besteht und eine Dicke von ca. 4 μm aufweist. Diese Absorberschicht 3 bildet die Meßfläche. Die Dicke der Absorberschicht 3 ist frei in Abhängigkeit von der zu messenden Strahlung wählbar. Die Schichten 2 und 3 können auch miteinander einstückig sein.

Der Absorberschicht 3 gegenüber befindet sich auf der anderen Seite der Trägerfolie 1 eine hochohmige Widerstandsschicht 4, die beispielsweise mäanderförmig ausgebildet ist und ebenfalls aus ausgedampftem Gold oder Platin bestehen kann.

Der durch die Widerstandsschicht 4 gebildete Widerstand M liegt nach Fig. 2 in einem Zweig 5 einer Wheatstone'schen Brücke 6, die noch drei weitere Widerstände 7, 8 und 9 aufweist, von denen der Widerstand 9 die Widerstandsschicht R eines Referenzgerätes sein kann. Über die eine Diagonale der Brücke ist ein Meßgerät 10 geschaltet, während an der anderen Diagonale eine Spannung U anliegt. Die Wärmeleitschicht 2 an ihren Rändern berührend ist ein Kühlkörper 11 aufgesetzt, der sich mit Vorsprüngen 12 nach innen erstreckt, die eine Abschirmung bilden, welche lediglich den Zugang zur Absorberschicht 3 freiläßt, die von der schematisch angedeuteten Strahlung F getroffen wird. Die Trägerfolie 1 bildet mit der Wärmeleitschicht 2, der Absorberschicht 3 und der Widerstandsschicht 4 den Detektor des auch als Folienbolometer bezeichenbaren Meßgerätes.

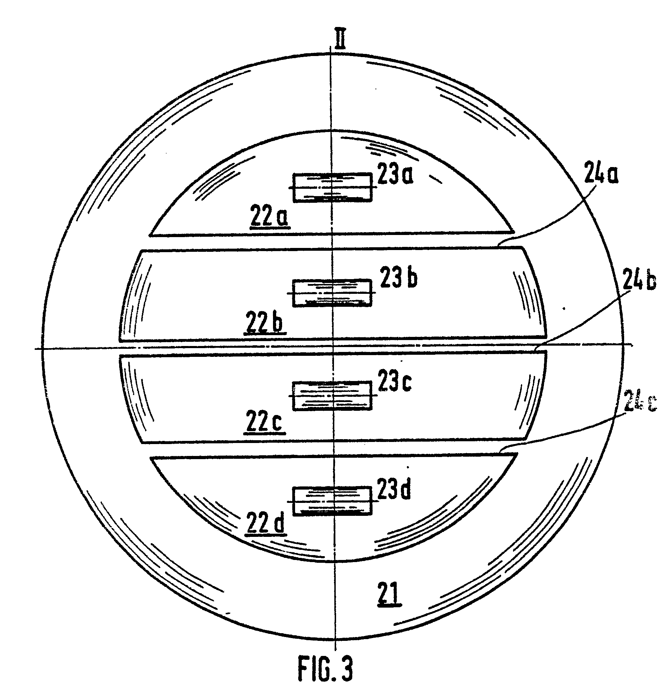

In Fig. 3 ist eine Anordnung mit vier nebeneinanderliegenden Detektoren in Draufsicht, allerdings ohne abschirmenden Kühlkörper darstellt. Man erkennt die mit 21 bezeichnete Trägerfolie, die im vorliegenden Fall als kreisförmiges Gebilde ausgeführt ist. Über den Durchmesser II-II sind in Reihe vier mit 23a, 23b, 23c und 23d bezeichnete Absorberschichten vorgesehen, die jeweils auf Wärmeleitschichten 22a, 22b, 22c, 22d sitzen. Die Ausbildung dieser Wärmeleitschichten ist derart, daß sie sich unter Wahrung entsprechender Abstände 24a, 24b und 24c im Umriß dem kreisförmigen Umriß der Trägerfolie 21 anpassen.

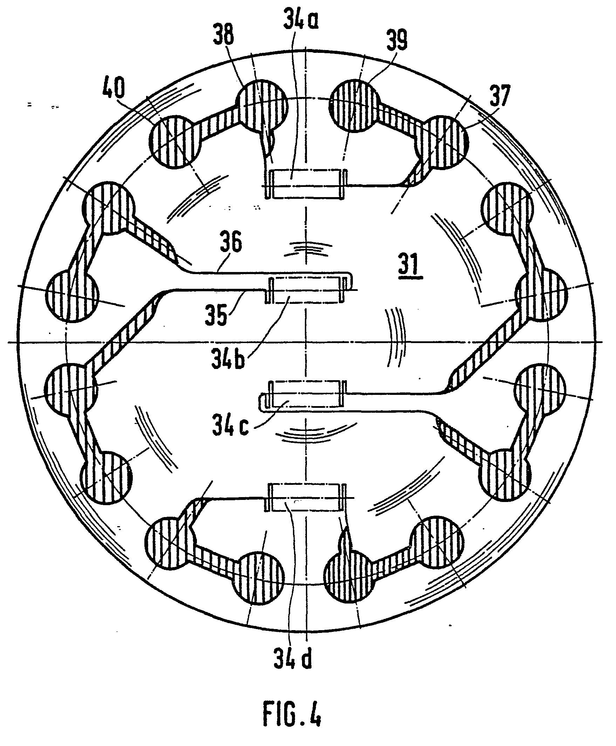

Bei der in Fig. 4 wiedergegebenen Unteransicht der Trägerfolie, die hier mit 31 bezeichnet ist, erkennt man die hochohmigen Widerstandsschichten 34a, 34b, 34c und 34d. Diese befinden sich genau am Ort unter den Absorberschichten 23a, 23b, 23c, 23d auf der anderen Seite der Trägerfolie, wie sie in Fig. 3 mit 21 bezeichnet ist, so daß sich Absorberschicht und entsprechende hochohmige Widerstandsschicht, beispielsweise Absorberschicht 23a und hochohmige Widerstandsschicht 34a auf den beiden Seiten der Trägerfolie exakt gegenüberliegen. Beim wiedergegebenen Ausführungsbeispiel sind die hochohmigen Widerstandsschichten mäanderförmig ausgebildet. Die einzelnen Widerstandsschichten sind über Leitungen 35, 36, die nur für die Widerstandsschicht 34b im einzelnen mit Bezugszeichen versehen sind, mit inneren Anschlußflächen 37 und 38 verbunden, die mit weiteren äußeren Anschlußflächen 39 und 40 in Verbindung stehen. Ein solches Gebilde, wie es sich aus den Fig. 3 und 4 im einzelnen ergibt, ist nicht nur für das der Strahlung ausgesetzte Meßgerät vorgesehen, sondern auch für ein im Meßsystem vorgesehenes Referenzgerät, das keiner Strahlung ausgesetzt, vielmehr gegen diese zu messende Strahlung abgeschirmt ist.

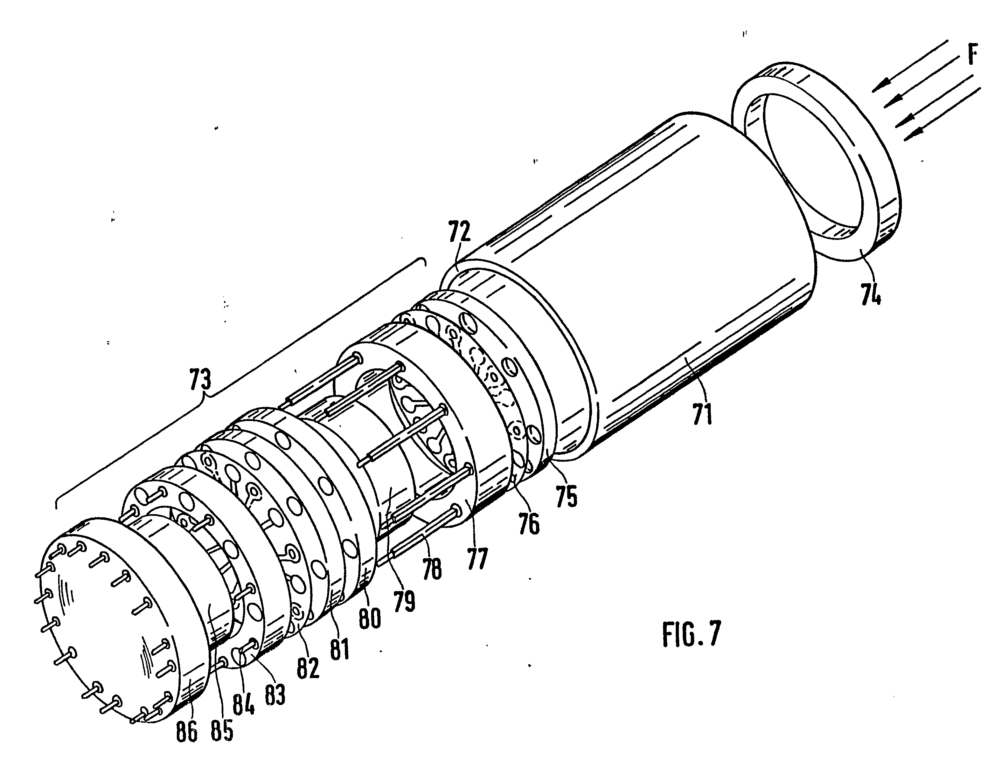

Das der Strahlung ausgesetzte Meßgerät und das gegen die Strahlung abgeschirmte Referenzgerät sind bei der in Fig. 7 dargestellten Ausführungsform in einem einzigen Gehäuse hintereinander angeordnet.

Die Widerstandsschicht(en) des Referenzgerätes sind dabei elektrisch in die Wheatstone'sche Brücke 6 nach Fig. 2 eingeschaltet und entsprechen dort dem Widerstand 9.

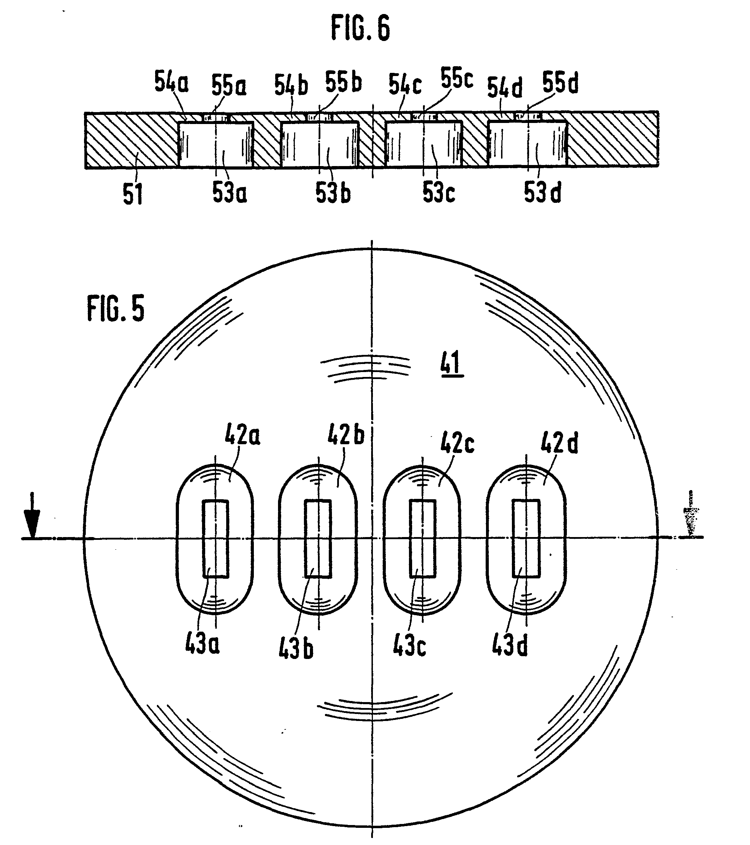

Fig. 5 zeigt den auf die Trägerfolie mit aufgebrachten Wärmeschichten und aufgesetzten Absorberschichten aufzusetzenden Kühlkörper 41, der die Ausnehmungen 42a, 42b, 42c und 42d aufweist, die an ihrer Deckfläche Fenster 43a, 43b, 43c und 43d besitzen.

Die Anordnung wird deutlicher aus der Schnittdarstellung nach Fig. 6. Man erkennt dort den Kühlkörper 51 mit den Ausnehmungen 53a, 53b, 53c und 53d, in deren Deckflächen 54a, 54b, 54c und 54d Fenster 55a, 55b, 55c und 55d vorgesehen sind, deren Abmessungen, wie die Zeichnung im Zusammenhang mit Fig. 3 deutlich erkennen läßt, gleich den Abmessungen der Absorberschichten 23a, 23b, 23c und 23d sind.

Fig. 7 zeigt eine perspektivische Explosionszeichnung einer Ausführungsform eines Meßsystems mit dem erfindungsgemäßen Meßgerät und einem Referenzgerät. Ein zylindrisches Gehäuse 71 ist an einem Ende mit einem Innenbund 72 versehen. Auf diesem Innenbund 72 stützt sich die mit 73 bezeichnete Anordnung auf, wenn diese von rechts nach Fig. 7 in das zylindrische Gehäuse 71 eingeschoben wird. Die Fixierung erfolgt mit Hilfe eines Gewinderinges 74, der in ein entsprechendes Innengewinde am anderen, hier rechten Ende des zylindrischen Gehäuses 71 eingeschraubt wird.

Mit 75 ist der eben im Zusammenhang mit den Fig. 5 und 6 beschriebene Kühlkörper bezeichnet, der somit die entsprechende Wandstärke und die entsprechenden Ausnehmungen sowie die entsprechenden Fenster aufweist. 76 bedeutet die Darstellung des der Strahlung ausgesetzten Meßgerätes, bestehend aus Trägerfolie und in Richtung der Einstrahlung (Pfeile F) aufgesetzten Wärmeleitschichten und Absorberschichten. Es folgt dann ein Sockel 77, der aus einem Isoliermaterial besteht und in den Kontaktstifte 78 eingesetzt sind. Die Kontaktstifte 78 ragen durch den Sockel 77 hindurch und enden auf dem Meßgerät 76 zugewendeten Seite in Kontaktflächen, die sich leicht mit den Kontaktflächen auf dem Meßgerät 76 verbinden lassen. Auch die Unterseite der Trägerfolie, d. h. die die Widerstandsschichten tragende Seite steht mit einem Kühlkörper in Kontakt, nämlich einem zylindrischen Körper aus Aluminium, der jedoch solche Ausnehmungen aufweist, daß er die einzelnen Anschlüsse und Widerstandsschichten nicht kurzschließt. Dieser Kühlkörper ist in der Zeichnung mit dem Bezugszeichen 79 bezeichnet.

Es folgt dann eine durchgehende Trennscheibe 80, beispielsweise eine Aluminiumscheibe, die den messenden Teil des Systems (Meßgerät) gegen den Referenzteil (Referenzgerät) vollständig abschirmt. Mit 81 ist ein Kühlkörper bezeichnet, der dem Kühlkörper 75 in jeder Hinsicht entspricht. Mit 82 ist ein Referenzgerät bezeichnet, das dem Meßgerät 76 in jeder Hinsicht entspricht. Daran schließt sich ein Sockel 83 an, der im wesentlichen dem Sockel 77 entspricht und Kontaktstifte 84 entsprechend den Kontaktstiften 78 trägt. Diese Kontaktstifte 84 sind gegenüber den Kontaktstiften 78 so versetzt, daß sie genau mittig zwischen den Kontaktstiften 78 sitzen. Auch hier ist wieder ein Kühlkörper 89 vorgesehen, der im wesentlichen dem Kühlkörper 79 entspricht. Beide Arten von Kontaktstiften 78 bzw. 84 sind in einen gemeinsamen Sockel 86 gesteckt, bei dem es sich um einen Isolierkörper ähnlich wie bei den Sockeln 77 und 83 handelt.

Auf dem Referenzgerät 82 sind diejenigen Anschlußflächen auf der die Widerstandsschichten tragenden Seite der Trägerfolie ausgebohrt, durch die die Kontaktstifte 78 hindurchgreifen, so daß kein Kontakt zwischen dem Referenzbolometer und dem eigentlichen, der Strahlung ausgesetzten Meßbolometer entsteht, vielmehr die entsprechende Reihe von Kontakten über den Sockel 83 vorsteht und zweckmäßig in einem eine entsprechende Anzahl von Kontakten tragenden Abschlußsockel eingesteckt ist.

Durch die Anordnung von Meß- und Referenzgerät derart, daß die Kontakte gegeneinander versetzt sind, und durch die Einschaltung in eine Wheatstone'sche Brücke erreicht man eine Kompensation zeitlich verschiedener Magnetfelder. Durch den gewählten Einbau des Referenzgerätes erreicht man

6

darüber hinaus eine vollständige Kompensation nicht meßbarer Strahlungsteile, die lediglich das Gehäuse und die mit ihm in Verbindung stehenden Teile des Meßsystems erwärmen, ohne daß die Messung beeinflußt wird.

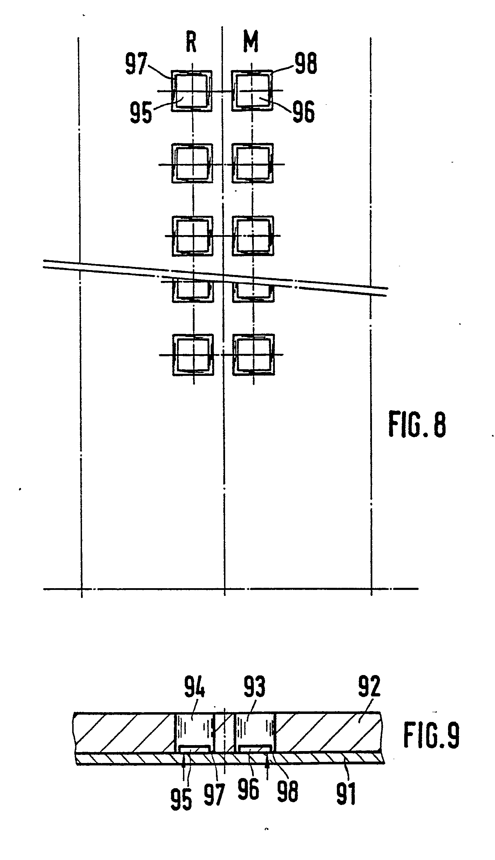

Bei der Ausführungsform nach Fig. 8 sind Meß- und Referenzgerät nebeneinander und mehrere solcher Gerätepaare hintereinander in je einer Reihe angeordnet. In der rechten Reihe M sollen die Meßgeräte in der linken Reihe R die Referenzgeräte sitzen.

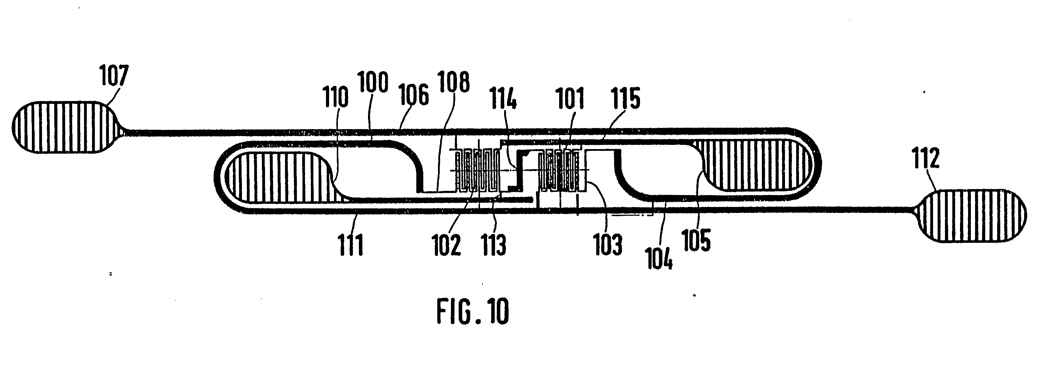

In Fig. 9 ist im Schnitt der Aufbau angedeutet. 91 bedeutet die Trägerfolie, auf die eine Goldschicht 92 aufgedampft ist, welche den Kühlkörper bilden. Sie hat z. B. eine Dicke von 25 $\mu$m. In dieser Schicht 92 sind Ausnehmungen 93 und 94 ausgeformt, die einen Boden aufweisen, dessen mittlerer Bereich 95 bzw. 96 jeweils eine Absorberschicht von z. B. 4 $\mu$m Dicke bildet, die unmittelbar über einen Randbereich 97 bzw. 98 (vlg. auch Fig. 8), der eine entsprechend geringere Dicke von z. B. nur 0,5 $\mu$m aufweist und die Wärmeleitschicht bildet, in die Kühlkörperschicht 92 übergeht. Absorberschicht, Wärmeleitschicht und Kühlkörper sind also einstückig. Die Herstellung eines solchen Gebildes im Aufdampf- und Ätzverfahren bereitet keine Schwierigkeiten.

Bei der in Fig. 8 und 9 wiedergegebenen Ausführungsform erfolgt die Abdeckung der Wärmeleitschicht und des Kühlkörpers durch eine mittels Fenster die Einstrahlung nur auf die Absorberschicht des Meßgerätes beschränkende Abdeckung aus geeignetem Material. Für die Referenzgeräte ist die Absorberschicht selbstverständlich ebenfalls durch diese Abdeckung gegen die einfallende Strahlung abgeschirmt. Die Abdeckung ist in Fig. 9 nicht dargestellt. Man kann die die Einstrahlung auf die gewünschten Absorberschichten beschränkenden Fenster auch durch überkragende Ränder an den entsprechenden Ausnehmungen 93 verwirklichen, jedoch ist diese Ausgestaltung schwierig und auch aufwendig.

In Fig. 10 ist ein zu einem Meß- und Referenzgerätepaar gehörendes Paar von hochohmigen Widerstandsschichten wiedergegeben, die auf der von der Meß- und Referenzgeräteseite abgewendeten Seite, Meß- und Referenzgeräte in ihrer Lagegenau angepaßt, vorgesehen ist. Dabei umfassen die Anordnungen 101 und 102 nicht nur die zum jeweiligen Meßwiderstand M (vgl. Widerstand 4 nach Fig. 2) bzw. zum jeweiligen Referenzwiderstand R (vgl. Widerstand 9 nach Fig. 2) gehörende, hier in Form jeweils eines flachen Mäanders ausgebildete Widerstandswicklung, sondern auch die in der Meßbrücke jeweils gegenüberliegende ebenfalls als Mäander ausgebildete Wicklung (vgl. Widerstand 8 bzw. 7 nach Fig. 2). Solche Mäander lassen sich, wie Fig. 10 erkennen läßt, ineinander verzahnen oder verschachteln, so daß jeweils ein beide Widerstände umfassendes flächiges Gebilde entsteht. Aus diesen flächigen Gebilden 101 und 102 lassen sich die Brückeneckknoten so herausführen, daß nirgends eine Überschneidung entsteht, wodurch die Herstellung der Anordnung wesentlich erleichtert ist.

Vom Ende 103 einer der mäanderartigen Widerstände des Gebildes 101 führt eine Anschlußleitung zu einer Leiterbahn 104, die um eine Anschlußfläche 105 herum und dann als die eine äußere Leiterbahn 106 zur äußeren Anschlußfläche 107 geführt ist. Vom Gebilde 102 führt eine Anschlußleitung 108 zu einer Leiterbahn 109, die um eine Anschlußfläche 110 herum und dann als die andere äußere Leiterbahn 111 zur anderen äußeren Anschlußfläche 112 führt. Der mit dem einen Ende an der Anschlußleitung 103 liegende Widerstand des Gebildes 101 liegt am anderen Ende an der äußeren Leiterbahn 111. Der mit dem einen Ende an der Anschlußleitung 108 liegende Widerstand des Gebildes 102 liegt mit dem anderen Ende sowohl an einer inneren, zur Anschlußfläche 110 führenden Leiterbahn 113 als auch an einem Verbindungsteil 114, der auch mit dem zweiten Widerstand im Gebilde 101 verbunden ist, welcher mit seinem anderen Ende an die Leiterbahn 115 angeschaltet ist, die zur inneren Anschlußläche 105 führt. Außerdem ist an die Leiterbahn 115 das eine Ende des zweiten Widerstandes 102 angeschaltet, der mit seinem anderen Ende an der äußeren Leiterbahn 106 liegt. Verfolgt man die einzelnen Verbindungen, so ergibt die Gesamtanordnung die Brückenschaltung nach Fig. 2, wobei jedoch Meßwiderstand und gegenüberliegender Widerstand 8 bzw. Referenzwiderstand 9 und sein gegenüberliegender Widerstand 7 jeweils in der Umgrenzung eines vorgegebenen Feldes liegen, dem auf der anderen Seite der Trägerfolie die jeweiligen Absorberschichten von Meß- bzw. Referenzgerät gegenüberliegen.

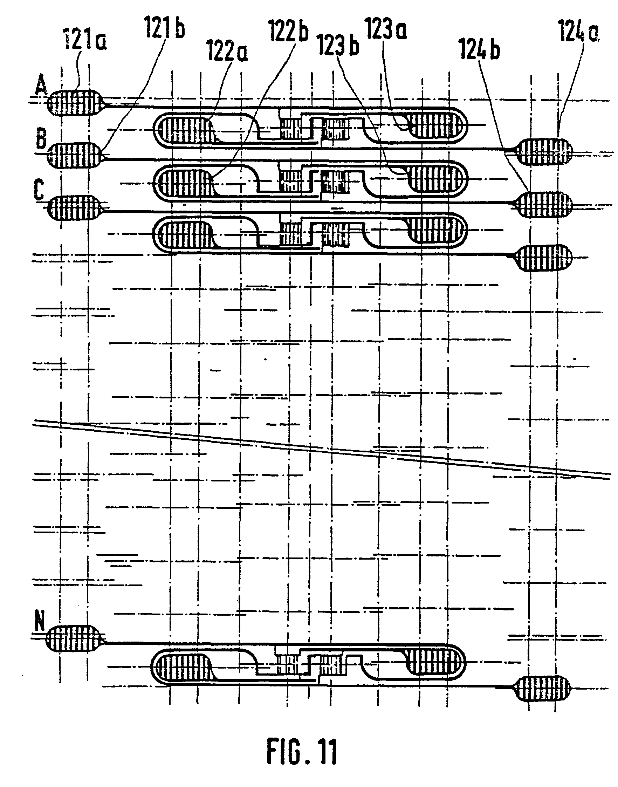

Fig. 11 zeigt die Mehrfachanordnung solcher in Fig. 10 im einzelnen wiedergegebener Schaltungen. Damit sich benachbarte Schaltungen A, B, C... N nicht wechselseitig elektrisch stören, sind die Anschlußflächen 121a und 122a der Schaltung A an die Wechselspannungsversorgung der Brückenschaltung gelegt, während die Verbindung der restlichen beiden Anschlußflächen 123a und 124a die Meßdiagonale bildet. Bei der nächsten Schaltung B liegen die Anschlüsse umgekehrt, d. h. zwischen den Anschlußflächen 121b und 122b befindet sich die Meßdiagonale, während die Versorgungsdiagonale zwischen den Anschlußflächen 123b und 124b liegt. Bei der Schaltung C liegen die Anschlußverhältnisse wieder wie bei der Schaltung A usw. Es liegen also immer Meßleitungen bzw. Versorgungsleitungen nebeneinander, so daß sich allenfalls immer geringe Spannungen der Meßleitungen bzw. hohe Spannungen der Versorgungsleitungen beeinflussen und nicht die hohe Spannung an einer Versorgungsleitung auf die geringe Spannung an einer Meßleitung einstreut. Es ist also dafür gesorgt, daß die äußeren Leiterbahnen 106 und 11 (Fig. 10) benachbarter Schaltungen immer gleiche Potentiale führen.

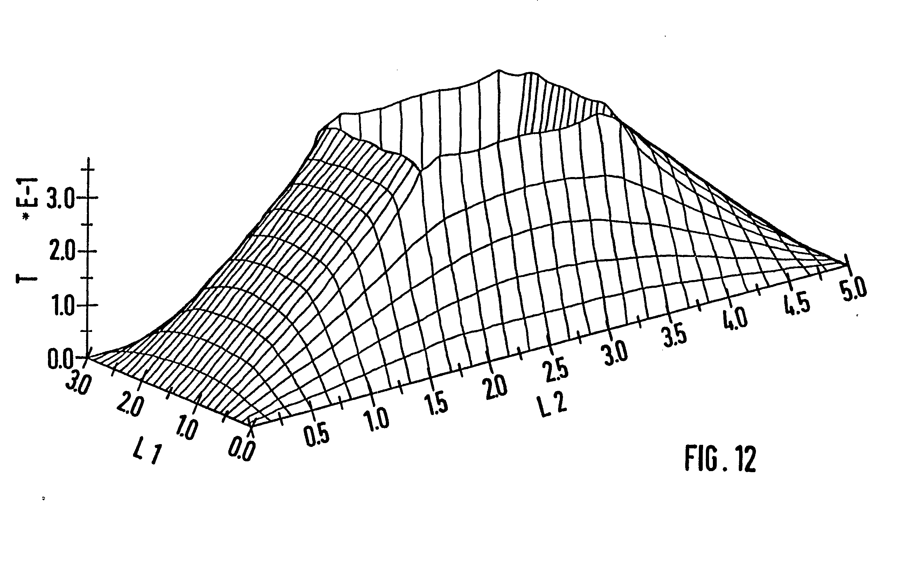

Im folgenden soll anhand der Fig. 12 bis 15 die Wirkungsweise eines Gerätes nach der Erfindung näher erläutert werden :

Fig. 12 zeigt räumlich den Temperaturverlauf von der an der Absorberschicht (oben) herrschenden höchsten Temperatur bis zum Kühlkörper (Umgebungstemperatur) für den Zeitpunkt t. Längs der Achsen L1 und L2 sind die Abmessungen der Absorberschicht in mm angegeben. Auf der Temperaturskala ist mit T die Temperaturdifferenz zwischen der Umgebungstemperatur und der Temperatur des Absorbers in °Kelvin angegeben.

Die Absorberschicht ist der zu messenden Strahlung ausgesetzt. Die in der Absorberschicht absorbierte Strahlung führt zu einer Erwärmung der Absorberschicht. Die Wärme fließt in Richtung der hochohmigen Widerstandsschicht und zu den Seiten hin ab. Die Widerstandsschicht ändert ihren Widerstandswert meßbar, und zwar umso deutlicher, je hochohmiger sie ist. Die auftreffende Strahlung führt solange zu einer weiteren Erhitzung der Absorberschicht, bis die zu den Seiten hin abfließende Wärme gleich der absorbierten Strahlungsleistung ist. Die Wärme wird dabei von dem massereichen Kühlkörper mit großer Wärmekapazität und zu vernachlässigender Aufheizung abtransportiert. Die Änderung des Widerstandes der Widerstandsschicht auf der der Absorberschicht gegenüberliegenden Seite der Trägerfolie ist ein Maß für die über die Fläche der Widerstands- bzw. Absorberschicht gemittelte Temperaturänderung.

Man kann zeigen, daß die Temperaturänderung des Detektors als Antwort einer Sprungfunktion der Leistung näherungsweise durch eine Exponentialfunktion folgender Form dargestellt werden kann :

$$\langle \vartheta_0(t) \rangle = P_0\, \tau_{eff}/c_{eff} \left( 1 - e^{-\frac{t}{\tau_{eff}}} \right) \tag{1}$$

Die Konstanten $\tau_{eff}$ und $c_{eff}$ werden Bolometerkonstante genannt.

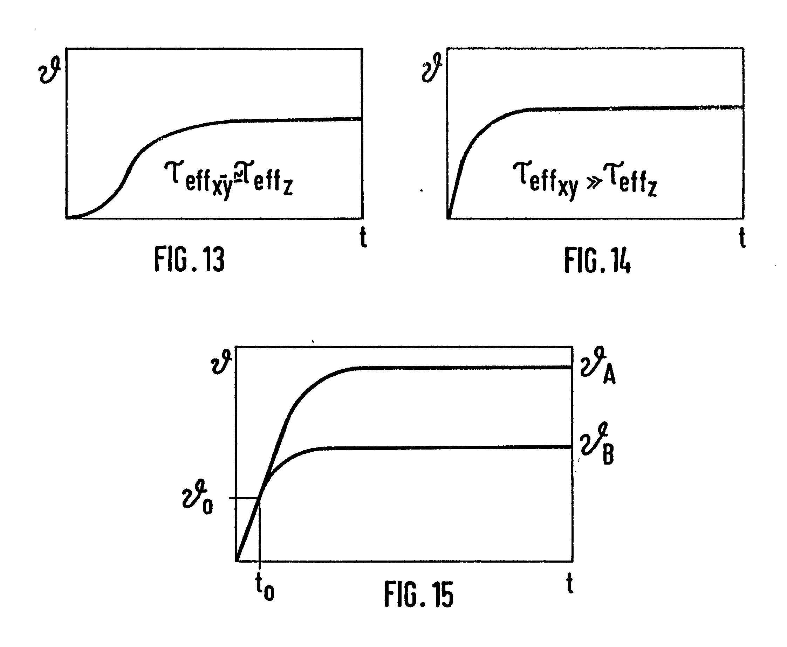

Die Näherung gilt allerdings nur, wenn die Zeit für den Temperaturausgleich in Richtung der Widerstandsschicht wesentlich schneller als der Temperaturausgleich zu den Seiten hin erfolgt. Die Zeitkonstante $\tau eff_{xy}$ der Wärmeleitung in X- und Y-Richtung muß also wesentlich größer sein, als die in Z-Richtung geltende Zeitkonstante $\tau eff_z$. Der Grund dafür läßt sich in zwei Diagrammen verdeutlichen, die in Fig. 13 und 14 wiedergegeben sind.

In ersten Fall (Fig. 13) ergibt sich eine schwierige Beschreibung der thermischen Vorgänge, um von der Temperaturänderung und der daraus folgenden Meßbaren Widerstandsänderung des Bolometerwiderstandes auf die einfallende Leistung zu schließen, während für den zweiten Fall (Fig. 14) für zeitlich sich verändernde Strahlungsleistungen mit Gleichung 1) aus der Theorie der Differentialgleichung folgt

$$P(t) = c_{eff} \left( \frac{d\,\langle \vartheta(t) \rangle}{dt} + \frac{\langle \vartheta(t) \rangle}{\tau_{eff}} \right)$$

Es kommt also darauf an, den Bolometerdetektor konstruktiv so auszulegen, daß der Wärmefluß von der Absorberseite durch die dünne Trägerfolie auf die Widerstandsschicht in wesentlich kürzerer Zeit erfolgt, als der seitliche Abfluß der Wärme von der Absorberschicht zu dem sie begrenzenden Kühlkörper. Es ist dabei wesentlich, daß das der Strahlungsquelle zugewendete Meßbolometer völlig · mit einer elektrisch leitenden und wärmeleitenden Schicht bedeckt ist, um Aufladung durch Sekundärelektronen zu vermeiden und definierte Wärmetransportbedingungen zum Kühlkörper sowie definierte Kenndaten zu erreichen.

Der Abfluß der Wärme kann konstruktiv durch Vergrößerung bzw. Verkleinerung der Dicke der Absorberschicht, aber auch durch Vergrößerung bzw. Verkleinerung ihrer Längen- bzw. Breitenabmessungen beeinflußt werden.

Bei gegebener Dicke ergibt sich für eine Vergrößerung der Zeitkonstante eine entsprechende Vergrößerung der Längen- bzw. Breitenabmessungen. Eine Verringerung der Dicke würde eine Verkleinerung der seitlichen Abmessungen bei gleicher Zeitkonstante verlangen. Die Zeitkonstante darf allerdings nicht beliebig groß gewählt werden, da dies einerseits zu einer größeren Erhitzung des Detektors, aber andererseits zu keiner ausnutzbaren Erhöhung der Empfindlichkeit des Bolometers führt. Das Diagramm in Fig. 15 verdeutlicht diesen Sachverhalt.

Für die kurze Zeit $t_0$ ist die Temperaturdifferenz $\vartheta_0$ der Absorberschicht für den Detektor mit großer Zeitkonstante (B) und dem mit kleiner Zeitkonstante (A) nahezu identisch, während für lange Zeiten t die Temperaturänderung $\vartheta_A$ geringer ist, als für den Fall (B). Man kann also nur für größere Zeiten die höhere Empfindlichkeit ausnutzen, wobei es aber genügt, daß das Signal-Rausch-Verhältnis ungefähr den Wert 1000 hat. Außerdem führt eine weitere Erhöhung der Zeitkonstante zu einer Einschränkung der Dynamik gegenüber den zu messenden Strahlungsleistungen und die Eigenabstrahlung der Absorberschicht wird durch die höhere Detektortemperatur nicht mehr vernachlässigbar.

Im Zusammenhang mit Fig. 2 ist noch auf eine besonders vorteilhafte Möglichkeit des Einsatzes des erfindungsgemäßen Meßsystems hinzuweisen.

Wählt man als Spannung U eine Gegentaktwechselspannung, dann liegt am oberen Spannungsanschluß eine zum unteren Spannungsanschluß um 180° versetzte Wechselspannung an.

Dies hat zur Folge, daß bei abgeglichener Brücke die Meßdiagonale immer den Spannungswert Null hat. Dadurch ergibt sich die Möglichkeit der Messung gegen den Nullwert und man erhält somit Meßsignale, die erheblich verstärkbar sind, weil keinerlei Versetzung (Offset) vorliegt. Ein weiterer Vorteil ergibt sich daraus, daß wegen dieser Art der Wechselspannungsversorgung der Wheatstone'schen Brücke eine Auswertung nach der Lock-In-Technologie erfolgen kann.

8

**Patentansprüche**

1. Strahlungsmeßgerät (Bolometer) mit einer elektrisch isolierenden Trägerfolie, auf deren einer Seite eine der zu messenden Strahlung auszusetzende Absorberschicht vorgesehen ist, der gegenüber auf der anderen Seite der Trägerfolie eine hochohmige Widerstandsschicht aufgebracht ist, die Bestandteil einer Widerstandsmeßbrücke ist, dadurch gekennzeichnet, daß die Absorberschicht (3, 23a-23d) in eine seitlich vorstehende mit ihr in thermisch leitendem Kontakt stehende Wärmeleitschicht (2, 22a bis 22d) übergeht und daß die Wärmeleitschicht gegen die zu messende Strahlung abgeschirmt ist.

2. Meßgerät nach Anspruch 1, dadurch gekennzeichnet, daß ein Kühlkörper (11, 41, 51, 92) an die seitlich vorstehende Wärmeleitschicht (2, 22a-22d, 97, 98) angeschlossen ist.

3. Meßgerät nach Anspruch 1 oder 2, dadurch gekennzeichnet, daß die Absorberschicht (3) aus einem Edelmetall, vorzugsweise Gold, besteht.

4. Meßgerät nach Anspruch 1, 2 oder 3, dadurch gekennzeichnet, daß die Wärmeleitschicht (2) aus dem gleichen Material wie die Absorberschicht (3) besteht.

5. Meßgerät nach einem oder mehreren der vorhergehenden Ansprüche, dadurch gekennzeichnet, daß die Wärmeleitschicht (2) aus einer die Absorberschicht (3) seitlich überragenden wesentlich dünneren, gegebenenfalls mit ihr einstückigen und/oder aus dem gleichen Material wie die Absorberschicht gefertigten Schicht besteht.

6. Meßgerät nach einem oder mehreren der vorhergehenden Ansprüche, dadurch gekennzeichnet, daß mehrere je eine Absorberschicht (23a bis 23d) tragende Wärmeleitschichten (22a bis 22d) mit Abstand in Reihen nebeneinander angeordnet sind (Fig. 3).

7. Meßgerät nach einem oder mehreren der vorhergehenden Ansprüche, dadurch gekennzeichnet, daß die den Absorberschichten (3 ; 23a bis 23d) zugeordneten hochohmigen Widerstandsschichten (4 ; 34a bis 34d) jeweils in einer gesonderten Widerstandsmeßbrücke geschaltet sind.

8. Meßgerät nach einem oder mehreren der Ansprüche 1 bis 6, dadurch gekennzeichnet, daß von den den Absorberschichten (23a bis 23d) zugeordneten hochohmigen Widerstandsschichten (34a bis 34d) wenigstens einige in Reihe geschaltet und die derart gebildeten Widerstandsgruppen in einer gesonderten Widerstandsmeßbrücke geschaltet sind.

9. Meßgerät nach Anspruch 7 oder 8, dadurch gekennzeichnet, daß der der hochohmigen Widerstandsschicht (4) in der Meßbrücke gegenüberliegende Festwiderstand (8) ebenfalls als hochohmige Widerstandsschicht ausgebildet und zusammen mit der hochohmigen Widerstandsschicht auf der der Absorberschicht abgewendeten Seite der Trägerfolie innerhalb einer der Umgrenzung der Absorberschicht entsprechenden Umgrenzung angeordnet ist.

10. Meßgerät nach einem der vorangehenden Ansprüche, dadurch gekennzeichnet, daß der Kühlkörper (11, 41, 51, 92) ein Fenster (43a, 55a usw. ; 93, 94) für die zu der Absorberschicht (3, 23a-23d, 95, 96) gelangende Strahlung bildet.

11. Meßgerät nach Anspruch 10 mit mehreren Absorberschichten und Wärmeleitschichten, dadurch gekennzeichnet, daß die Wärmeleitschichten (2 ; 22a-22d) über einen Kühlkörper (11 ; 41 ; 51) miteinander verbunden sind ; daß der Kühlkörper als die Wärmeleitschichten (22a bis 22d) kontaktierende, gegenüber den Dickenabmessungen der Absorber- und Wärmeleitschichten wesentlich größere Dickenabmessungen aufweisende Scheibe aus einem gut wärmeleitenden Material ausgebildet ist, die jeweils im Bereich der Absorberschichten eine Ausnehmung (53a bis 53d) aufweist, deren seitliche Begrenzungen einen Abstand von den seitlichen Begrenzungen der Absorberschichten aufweisen und deren jeweilige Deckfläche (54a bis 54d) mit einem Fenster (55a bis 55d) versehen ist, dessen Abmessungen denen der Absorberschicht entsprechen (Fig. 5 und 6).

12. Meßgerät nach Anspruch 10, dadurch gekennzeichnet, daß der Kühlkörper aus dem Material der Wärmeleitschichten besteht und mit diesen einstückig ausgebildet ist (Fig. 9).

13. Meßgerät nach Anspruch 12, dadurch gekennzeichnet, daß auf die Trägerfolie (91) eine Beschichtung (92) aufgetragen ist, die Ausnehmungen (93, 94) mit jeweils einem Boden aufweist, dessen mittlerer Bereich (95, 96) die Absorberschicht bildet, die über einen dünnen, die Wärmeleitschicht bildenden Randbereich (97, 98) in das Material der Beschichtung übergeht, die als ganzes den Kühlkörper bildet (Fig. 9).

14. Meßgerät nach Anspruch 13, dadurch gekennzeichnet, daß auf der den Kühlkörper bildenden Beschichtung der Trägerfolie ein Maskenkörper mit die Einstrahlung nur auf die Absorberschichten gewährleistenden Fenstern aufgesetzt ist.

15. Meßgerät nach einem oder mehreren der Ansprüche 11 bis 14, dadurch gekennzeichnet, daß der Abstand zwischen der Begrenzung der jeweiligen Ausnehmung und der Begrenzung der jeweiligen Absorberschicht so gewählt ist, daß der Wärmeübergang zwischen Absorberschicht und hochohmiger Widerstandsschicht wesentlich rascher erfolgt als der Wärmeübergang von der Begrenzung der Absorberschicht in den Kühlkörper.

16. Meßgerät nach Anspruch 15, dadurch gekennzeichnet, daß zur Einstellung der Zeitkonstanten des seitlichen Wärmeabflusses von der Absorberschicht zum Kühlkörper der Abstand der seitlichen Begrenzung der Absorberschichten zum Kühlkörper auf die Dicke der Wärmeleitfläche abgestimmt ist.

17. Meßgerät nach einem oder mehreren der vorhergehenden Ansprüche, dadurch gekennzeichnet, daß auf der die hochohmigen Widerstandsschichten (34a bis 34d) tragenden Seite der Trägerfolie (31) in die Widerstandsschichten umgebender Anordnung lötfähige Anschlußflächen (37, 38 ; 39, 40) vorgesehen sind (Fig. 4).

18. Meßsystem mit einem Meßgerät nach einem oder mehreren der vorhergehenden Ansprüche und mit einem zugeordneten, gegen die zu messende Strahlung abgeschirmten Referenzgerät, dadurch gekennzeichnet, daß der Aufbau des Referenzgerätes identisch demjenigen des Meßgerätes entspricht und das Referenzgerät im gleichen Gehäuse wie das Meßgerät angeordnet ist.

19. Meßsystem nach Anspruch 17, dadurch gekennzeichnet, daß Meßgerät und Referenzgerät hintereinander im Gehäuse (71) angeordnet sind (Fig. 7).

20. Meßsystem nach Anspruch 19, dadurch gekennzeichnet, daß die lötfähigen Anschlußflächen auf der die Widerstandsschichten tragenden Seite der beiden Trägerfolien doppelt vorhanden und hintereinander geschaltet sind, so daß innere (37, 38) und äußere (39, 40) Anschlußflächen entstehen, daß bei dem Meßgerät die äußeren lötfähigen Anschlußflächen (39, 40) mit ersten Kontaktstiften (78) leitend verbunden sind ; daß beim Referenzgerät die inneren lötfähigen Anschlußflächen (37, 38) mit zweiten Kontaktstiften (84) leitend verbunden, während die äußeren Anschlußflächen (39, 40) ausgebohrt sind ; daß durch diese Anbohrungen die ersten Kontaktstifte (78) frei hindurchgreifen ; und daß die Enden der ersten (78) und zweiten (84) Kontaktstift den gemeinsamen Anschlußkörper des aus dem Meßgerät und aud dem Referenzgerät gebildeten Meßsystems bilden.

21. Meßsystem nach Anspruch 20, dadurch gekennzeichnet, daß das Meßgerät und das Referenzgerät über Kühlkörper (79, 80, 81) miteinander verbunden sind.

22. Meßsystem nach Anspruch 20 oder 21, dadurch gekennzeichnet, daß der Anschlußkörper durch einen gesonderten Sockelkörper (86) abgedeckt ist.

23. Meßsystem nach Anspruch 20, dadurch gekennzeichnet, daß die ersten (78) und zweiten (84) Kontaktstifte in einem gemeinsamen Sockel (86) gehalten sind.

24. Meßsystem nach Anspruch 18, dadurch gekennzeichnet, daß Meßgerät und Referenzgerät nebeneinander auf der Trägerfolie angeordnet sind, wobei das Referenzgerät gegen die zu messende Strahlung abgeschirmt ist.

25. Meßsystem nach Anspruch 24, dadurch gekennzeichnet, daß die hochohmigen Widerstandsschichten des Meßgeräts und die hochohmigen Widerstandsschichten des Referenzgerätes jeweils als Mäander ausgebildet und die Mäander der hochohmigen Widerstandsschichten von Meßgerät bzw. Referenzgerät ineinander verzahnt auf der Trägerfolie angeordnet sind und auf voneinander abgewendeten Seiten dieser Nebeneinanderanordnung von Meß- und Referenzgerät je zwei in Anschlußflächen ausmündende Leiterbahnen vorgesehen sind, von denen die äußeren die inneren um die Anschlußflächen dieser inneren Leiterbahnen herumschlingen, wobei der eine Mäander des einen Gerätes zwischen den beiden äußeren Leiterbahnen und der andere Mäander dieses Gerätes zwischen den inneren Leiterbahnen geschaltet ist, während die beiden Mäander des anderen Gerätes jeweils zwischen einer äußeren und einer inneren Leiterbahn geschaltet sind (Fig. 10).

26. Meßsystem nach Anspruch 25, dadurch gekennzeichnet, daß diese Anordnung zu mehreren in vorzugsweise symmetrischer Anordnung auf einer Trägerfolie vorgesehen ist (Fig. 11).

27. Meßsystem nach Anspruch 26, dadurch gekennzeichnet, daß die äußeren Leiterbahnen benachbarten Schaltungen (A, B, C...N Fig. 11) gleiche Potentiale führen.

28. Meßsystem nach einem der vorangehenden Ansprüche, dadurch gekennzeichnet, daß an die eine Diagonale der Widerstandsmeßbrücke (6) eine Gegentaktwechselspannung (U) angelegt wird.


**Claims**

1. Radiation measuring device (bolometer) with an electrically insulating substrate film on one side of which is provided an absorber layer to be exposed to the radiation to be measured, opposite which on the other side of the substrate film is applied a high-resistance coating which forms part of a resistance measuring bridge, characterised in that the absorber layer (3, 23a-23d) merges into a laterally projecting heat conducting layer (2, 22a-22d) which is in thermally conductive contact with it, and the heat conducting layer is shielded from the radiation to be measured.

2. Measuring device according to claim 1, characterised in that a heat sink (11, 41, 51, 92) is connected to the laterally projecting heat conducting layer (2, 22a-22d, 97, 98).

3. Measuring device according to claim 1 or 2, characterised in that the absorber layer (3) is made of a precious metal, preferably gold.

4. Measuring device according to claim 1, 2 or 3, characterised in that the heat conducting layer (2) is made of the same material as the absorber layer (3).

5. Measuring device according to one or more of the preceding claims, characterised in that the heat conducting layer (2) consists of a layer which projects laterally beyond the absorber layer (3), and is essentially thinner and if necessary integral with it and/or made of the same material as the absorber layer.

6. Measuring device according to one or more of the preceding claims, characterised in that several heat conducting layers (22a-22d), each carrying an absorber layer (23a-23d), are arranged spaced apart in rows adjacent to each other (Fig. 3).

7. Measuring device according to one or more of the preceding claims, characterised in that the high-resistance coatings (4 ; 34a-34d) associated with the absorber layers (3 ; 23a-23d) are each connected in a separate resistance measuring bridge.

8. Measuring device according to one or more of claims 1 to 6, characterised in that of the high-resistance coatings (34a-34d) associated with the absorber layers (23a-23d), at least some are connected in series, and the resistance groups thus formed are connected in a separate resistance measuring bridge.

9. Measuring device according to claim 7 or 8, characterised in that the fixed resistor (8) opposite the high-resistance coating (4) in the measuring bridge is also designed as a high-resistance coating and arranged together with the high-resistance coating on the side of the substrate film remote from the absorber layer within a boundary corresponding to the boundary of the absorber layer.

10. Measuring device according to any of the preceding claims, characterised in that the heat sink (11, 41, 51, 92) forms a window (43a, 55a, etc. ; 93, 94) for the radiation reaching the absorber layer (3, 23a-23d, 95, 96).

11. Measuring device according to claim 10 with several absorber layers and heat conducting layers, characterised in that the heat conducting layers (2 ; 22a-22d) are connected to each other by a heat sink (11 ; 41 ; 51), the heat sink is designed as a disc of high thermal conductivity material contacting the heat conducting layers (22a-22d) and having an essentially greater thickness than the thickness of the absorber and heat conducting layers, and comprising in the region of each absorber layer a recess (53a-53d) whose lateral boundaries are spaced apart from the lateral boundaries of the absorber layers and whose top surface (54a-54d) is provided with a window (55a-55d) whose dimensions correspond to those of the absorber layer (Fig. 5 and 6).

12. Measuring device according to claim 10, characterised in that the heat sink is made of the material of the heat conducting layers and constructed integrally with them (Fig. 9).

13. Measuring device according to claim 12, characterised in that to the substrate film (91) is applied a coating (92) which comprises recesses (93, 94) each with a bottom whose central region (95, 96) forms the absorber layer which merges via a thin edge region (97, 98) forming the heat conducting layer into the material of the coating which as a whole forms the heat sink (Fig. 9).

14. Measuring device according to claim 13, characterised in that on the coating of the substrate film forming the heat sink is placed a mask body with windows allowing irradiation of the absorber layers only.

15. Measuring device according to one or more of claims 11 to 14, characterised in that the distance between the boundary of the respective recess and the boundary of the respective absorber layer is selected so that heat is transferred essentially faster between absorber layer and high-resistance coating than from the boundary of the absorber layer to the heat sink.

16. Measuring device according to claim 15, characterised in that the adjust the time constants of lateral heat dissipation from the absorber layer to the heat sink, the distance between the lateral boundary of the absorber layers and the heat sink is adjusted with the thickness of the heat conducting surface.

17. Measuring device according to one or more of the preceding claims, characterised in that on the side of the substrate film (31) carrying the high-resistance coatings (34a-34d), in an arrangement surrounding the high-resistance coatings, are provided solderable connecting surfaces (37, 38 ; 39, 40) (Fig. 4).

18. Measuring system with a measuring device according to one or more of the preceding claims and with an associated reference device shielded from the radiation to be measured, characterised in that the structure of the reference device corresponds identically to that of the measuring device, and the reference device is disposed in the same housing as the measuring device.

19. Measuring system according to claim 17, characterised in that measuring device and reference device are arranged one behind the other in the housing (71) (Fig. 7).

20. Measuring system according to claim 19, characterised in that the solderable connecting surfaces on the side of the two substrate films carrying the high-resistance coatings are present in double form and connected in series, so that inner (37, 38) and outer (39, 40) connecting surfaces are formed ; in the measuring device the outer solderable connecting surfaces (39, 40) are conductively connected to first contact pins (78) ; in the reference device the inner solderable connecting surfaces (37, 38) are conductively connected to second contact pins (84) while the outer connecting surfaces (39, 40) are bored out ; the first contact pins (78) pass freely through these bores ; and the ends of the first (78) and second (84) contact pins form the common connecting body of the measuring system consisting of the measuring device and the reference device.

21. Measuring system according to claim 20, characterised in that the measuring device and the reference device are connected to each other by heat sinks (79, 80, 81).

22. Measuring system according to claim 20 or 21, characterised in that the connecting body is covered by a separate cap body (86).

23. Measuring system according to claim 20, characterised in that the first (78) and second (84) contact pins are held in a common cap (86).

24. Measuring system according to claim 18, characterised in that measuring device and reference device are arranged adjacent to each other on the substrate film, the reference device being shielded from the radiation to be measured.

25. Measuring system according to claim 24, characterised in that the high-resistance coatings of the measuring device and the high-resistance coatings of the reference device are each designed as meanders, and the meanders of the high-resistance coatings of measuring device and reference device are arranged interlocking with each other on the substrate film, and on each of opposite sides of this adjacent arrangement of measuring and reference devices are provided two strip conductors which lead into connecting surfaces and of which the outer ones encompass the inner ones around the connecting surfaces of these inner strip conductors, wherein one meander of one device is connected between the two outer strip conductors and the other meander of this device is connected between the inner strip conductors, while the two meanders of the other device are each connected between an outer and an inner strip conductor (Fig. 10).

26. Measuring system according to claim 25, characterised in that this arrangement is provided with several, preferably in a symmetrical arrangement on a substrate film (Fig. 11).

27. Measuring system according to claim 26, characterised in that the outer strip conductors of adjacent circuits (A, B, C, ..., N, Fig. 11) carry the same potential.

28. Measuring system according to any of the preceding claims, characterised in that a push-pull a. c. voltage (U) is applied to one diagonal of the resistance measuring bridge (6).


## Revendications

1. Appareil de mesure du rayonnement (Bolomètre) comprenant une feuille support isolante électriquement, sur une face de laquelle est prévue une couche absorbante à exposer au rayonnement à mesurer, une couche résistante fortement ohmique faisant partie d'un pont de mesure par résistance étant appliquée par contre sur l'autre face de la feuille support, caractérisé en ce que la couche absorbante (3, 23a à 23d) se transforme en une couche thermiquement conductrice (2, 22a à 22d) placée en contact thermiquement conducteur de manière saillante latéralement, et en ce que la couche thermiquement conductrice est pourvue d'un écran contre le rayonnement à mesurer.

2. Appareil de mesure selon la revendication 1, caractérisé en ce qu'un corps de refroidissement (11, 41, 51, 92) est raccordé à la couche conductrice (1, 22a à 22d, 97, 98) faisant saillie latéralement.

3. Appareil de mesure selon la revendication 1 ou 2, caractérisé en ce que la couche absorbante (3) se compose d'un métal noble, de préférence d'or.

4. Appareil de mesure selon la revendication 1, 2 ou 3, caractérisé en ce que la couche thermiquement conductrice (2) se compose du même matériau que la couche absorbante (3).

5. Appareil de mesure selon une ou plusieurs des revendications précédentes, caractérisé en ce que la couche thermiquement conductrice (2) se compose d'une couche en saillie latérale par rapport à la couche absorbante (3), sensiblement plus mince, le cas échéant fabriquée d'une seule pièce avec elle et/ou composée du même matériau que la couche absorbante.

6. Appareil de mesure selon une ou plusieurs des revendications précédentes, caractérisé en ce que plusieurs couches thermiquement conductrices (22a à 22d), portant chacune une couche absorbante (23a à 23d) sont disposées les unes à côté des autres, à distance, en série.

7. Appareil de mesure selon une ou plusieurs des revendications précédentes, caractérisé en ce que les couches résistantes (4 ; 34a à 34d) fortement résistantes afffectées aux couches absorbantes sont chaque fois branchées dans un pont de mesure à résistance spécial.

8. Appareil de mesure selon une ou plusieurs des revendications 1 à 6, caractérisé en ce que parmi les couches résistantes (34a à 34d) fortement ohmiques affectées aux couches absorbantes, au moins quelques-unes sont branchées en série et les groupes résistants formés de cette manière sont branchés dans un pont de mesure à résistance spécial.

9. Appareil de mesure selon la revendication 7 ou 8, caractérisé en ce que la résistance fixe (8) opposée à la couche résistante (4) fortement ohmique dans le pont de mesure est également réalisée sous forme de couche résistante fortement ohmique et disposée avec la couche résistante fortement ohmique sur le côté de la feuille support qui est opposé à la couche absorbante, à l'intérieur d'une limite correspondant à la limite de la couche absorbante.

10. Appareil de mesure selon l'une des revendications précédentes, caractérisé en ce que le corps de refroidissement (11, 41, 51, 92) forme une fenêtre (43a, 55a, etc. ; 93, 94) pour le rayonnement arrivant à la couche absorbante (3, 23a à 23d, 95, 96).

11. Appareil de mesure selon la revendication 10, avec plusieurs couches absorbantes et couches thermiquement conductrices, caractérisé en ce que les couches thermiquement conductrices (2 ; 22a à 22d) sont reliées ensemble par un corps de refroidissement (11 ; 41 ; 51) ; en ce que le corps de refroidissement est réalisé sous forme de disque mettant en contact les couches thermiquement conductrices (22a à 22d), présentant des épaisseurs sensiblement plus importantes que les épaisseurs des couches absorbantes et thermiquement conductrices, disque constitué d'une matière bonne conductrice de la chaleur, présentant chaque fois un évidement (53a à 53d) dans la zone des couches absorbantes, dont les limites latérales présentent un écartement par rapport aux limites latérales des couches absorbantes et donc chaque surface de recouvrement (54a à 54d) est pourvue d'une fenêtre (55a

EP 0 149 819 B1

à 55d), dont les dimensions correspondent à celles de la couche absorbante (Fig. 5 et 6).

12. Appareil de mesure selon la revendication 10, caractérisé en ce que le corps de refroidissement se compose du matériau des couches thermiquement conductrices et est réalisé d'une seule pièce avec celles-ci (Fig. 9).

13. Appareil de mesure selon la revendication 12, caractérisé en ce qu'un revêtement (92) présentant des évidements (93, 94) avec chaque fois un fond et dont la zone centrale (95, 96) forme la couche absorbante est appliqué sur la feuille support (91), couche centrale qui se transforme en matériau du revêtement par l'intermédiaire d'une mince zone de bordure (97, 98) formant la couche thermiquement conductrice, revêtement formant globalement le corps de refroidissement (Fig. 9).

14. Appareil de mesure selon la revendication 13, caractérisé en ce qu'un corps de masque avec des fenêtres n'autorisant le rayonnement incident a être appliqué que sur les couches absorbantes est disposé sur le revêtement de la feuille support formant le corps de refroidissement.

15. Appareil de mesure selon une ou plusieurs des revendications 11 à 14, caractérisé en ce que la distance entre la limite de chaque évidement et la limite de chaque couche absorbante est choisie telle que le transfert de chaleur entre couche absorbante et couche résistante fortement ohmique s'effectue sensiblement plus vite que le transfert de chaleur allant de la limite de couche absorbante vers le corps de refroidissement.

16. Appareil de mesure selon la revendication 15, caractérisé en ce que l'écartement de la limite latérale entre couches absorbantes et corps de refroidissement est déterminé à l'épaisseur de la surface thermiquement conductrice afin de régler les constantes de temps de l'évacuation de chaleur latérale allant de la couche absorbante au corps de refroidissement.

17. Appareil de mesure selon une ou plusieurs des revendications précédentes, caractérisé en ce que des faces de raccordement (67, 38 ; 39, 40) brasables sont prévues dans l'agencement entourant les couches résistantes, sur la face de la feuille support (31) portant les couches résistantes (34a à 34d) fortement ohmiques (Fig. 4).

18. Système de mesure avec un appareil de mesure selon une ou plusieurs des revendications précédentes et comprenant un appareil de référence lui étant affecté, écranté contre le rayonnement à mesurer, caractérisé en ce que la structure de l'appareil de mesure est identique à celle de l'appareil de mesure et l'appareil de référence étant disposé dans le même carter que l'appareil de mesure.

19. Appareil de mesure selon la revendication 17, caractérisé en ce que l'appareil de mesure et l'appareil de référence sont disposés l'un derrière l'autre dans le carter (71) (Fig. 7).

20. Appareil de mesure selon la revendication 19, caractérisé en ce que les faces de raccordement brasables existent en double sur la face des deux feuilles support portant les couches résistantes et branchées les unes derrière les autres, de façon qu'il y ait des faces de raccordement internes (37, 38) et externes (39, 40), en ce que, dans l'appareil de mesure, les faces de raccordement (39, 40) externes brasables étant reliées de manière conductrice à des premières broches de contact (78) ; en ce que, dans l'appareil de référence, les faces de raccordement (37, 38) internes brasables sont reliées de manière conductrice à des deuxièmes broches de contact (84), tandis que les faces de raccordement externes (39, 40) sont alésées ; en ce que les premières broches de contact (78) passent librement dans ces alésages ; et en ce que les extrémités des premières (78) et deuxièmes (84) broches de contact forment le corps de raccordement commun du système de mesure formé à partir de l'appareil de mesure et de l'appareil de référence.

21. Appareil de mesure selon la revendication 20, caractérisé en ce que l'appareil de mesure et l'appareil de référence soient reliés ensemble par des corps de refroidissement (79, 80, 81).

22. Appareil de mesure selon la revendication 20 ou 21, caractérisé en ce que le corps de raccordement est recouvert par un corps de socle (86) spécial.

23. Appareil de mesure selon la revendication 20, caractérisé en ce que les premières (78) et deuxièmes (84) broches de contact sont maintenues dans un socle (86) commun.

24. Appareil de mesure selon la revendication 18, caractérisé en ce que l'appareil de mesure et l'appareil de référence sont disposés l'un à côté de l'autre sur la feuille support, l'appareil de référence étant écranté contre le rayonnement à mesurer.

25. Système de mesure selon la revendication 24, caractérisé en ce que les couches résistantes fortement ohmiques de l'appareil de mesure et les couches résistantes fortement ohmiques de l'appareil de référence sont chaque fois réalisées sous forme de méandres et les méandres des couches résistantes fortement ohmiques de l'appareil de mesure, ou de l'appareil de référence sont disposées sur la feuille support en s'engrenant les unes dans les autres et que chaque fois deux pistes conductrices débouchant dans les faces de raccordement sont prévues sur les faces opposées les unes par rapport aux autres de cet arrangement côte-à-côte de l'appareil de mesure et de l'appareil de référence, pistes dont la piste extérieure enlacent la piste intérieure autour de ces faces de raccordement de ces pistes conductrices intérieures, l'un des méandres de l'un des appareils, situé entre les deux pistes conductrices extérieures et l'autre méandre de cet appareil, étant branché entre les pistes conductrices intérieures, tandis que les deux méandres de l'autre appareil sont chaque fois branchés entre une piste conductrice extérieure et une piste conductrice intérieure (Fig. 10).

26. Système de mesure selon la revendication 25, caractérisé en ce que cet arrangement est prévu en un arrangement multiple, de préférence symétrique, sur une feuille support (Fig. 11).

27. Système de mesure selon la revendication 26, caractérisé en ce que les pistes conductrices extérieures de circuits voisins (A, B, C ... N, Fig. 11) conduisent des potentiels identiques.

28. Système de mesure selon l'une des revendications précédentes, caractérisé en ce qu'une tension alternative symétrique (U) est appliquée à l'une des diagonales des ponts de mesure à résistance (6).

FIG.1

FIG.2

FIG. 3

FIG. 4

## FIG. 6

54a  55a  54b  55b  54c  55c  54d  55d

51  53a  53b  53c  53d

## FIG. 5

41

42a  42b  42c  42d

43a  43b  43c  43d

FIG.7

R    M

97    98
95    96

FIG. 8

94    93    92

FIG. 9

95  97  96  98  91

FIG. 10

EP 0 149 819 B1

121a 121b 122a 122b 123b 123a 124b 124a

A

B

C

N

FIG. 11

FIG. 12

EP 0 149 819 B1

$\vartheta$

$\mathcal{T}_{eff_{xy}} \cong \mathcal{T}_{eff_z}$

t

**FIG. 13**

$\vartheta$

$\mathcal{T}_{eff_{xy}} \gg \mathcal{T}_{eff_z}$

t

**FIG. 14**

$\vartheta$

$\vartheta_A$

$\vartheta_B$

$\vartheta_0$

$t_0$

t

**FIG. 15**